# DEMANDE DE BREVET EUROPEEN

(11) **EP 2 204 089 A1**
(43) Date de publication de la demande: **07.07.2010**
(21) Numéro de dépôt: 09306332.9
(22) Date de dépôt: 28.12.2009
(51) Int. Cl.: A01K 47/02

(54) **Cadre de ruche pour abeilles**

(30) Priorité: 30.12.2008 FR 0859135
(71) Demandeur: Miellerie Estivamiels, 42380 Estivareilles (FR)
(72) Inventeur: Beyssac, Lionel, 42380, ESTIVAREILLES (FR)
(74) Mandataire: Thivillier, Patrick

(57) **Abrégé**

Le cadre comprend une plaque support pleine (1) solidaire des côtés du cadre, ladite plaque (1) recevant, sur chacune de ses faces, une plaque alvéolaire rapportée (2) et (3) correspondant à la forme géométrique réalisée par la cire produite par les abeilles.

## Description

L'invention trouve une application pour les ruches Dadant, sans pour cela exclure d'autres types de ruches parfaitement connues pour un homme du métier.

On rappelle, pour une meilleure compréhension de la suite de la description, qu'une ruche Dadant, généralement réalisée en bois, notamment en pin ou sapin, comprend un plancher, le plus souvent grillagé, qui constitue le fond de la ruche. Ce plancher présente un espace déterminé pour permettre aux abeilles de rentrer dans la ruche et la quitter à volonté.

Le corps de la ruche en tant que tel, est constitué par un caisson ouvert à chacune des extrémités et posé sur le plancher. Le corps de ruche contient les cadres disposés verticalement et, par exemple, au nombre de 10. Généralement, au moins une hausse est disposée sur le corps de la ruche. La hausse a une longueur et largeur égales à celles du corps, et est de hauteur inférieure. La hausse est également équipée de cadres sur lesquels l'apiculteur récolte le miel. Au-dessus de cette hausse, ou de la dernière hausse dans le cas où la ruche en présente plusieurs, est posé un plateau faisant office de plafond et souvent percé d'une ouverture pour permettre l'alimentation des abeilles en hiver. L'ensemble est recouvert par un toit plat ou à double pente. Il apparaît donc que les différents éléments constitutifs de la ruche sont simplement superposés, sans être solidaires entre eux, afin de pouvoir facilement les séparer.

Dans chaque cadre, des abeilles cirières bâtissent des rayons et y emmagasinent le miel, dès que le corps de la ruche est plein. Les abeilles cirières réalisent des cavités hexagonales en cire, constituant des alvéoles, qui font à la fois office de berceau des jeunes larves et de grenier à miel.

Cette cire est sécrétée à partir des glandes cirières abdominales des abeilles sous forme de minces pellicules translucides incolores. Les abeilles extraient ces pellicules de leur abdomen, au moyen de leurs pattes postérieures, et les portent à leur bouche en les mâchant et en les imprégnant de salive, afin de les rendre plus malléables. C'est à partir de ces pellicules que sont donc réalisées, dans une forme géométrique parfaite, les différents alvéoles.

Plus particulièrement les alvéoles sont réalisées par les abeilles à partir d'une plaque centrale de cire fixée à l'intérieur du cadre, et présentant des alvéoles préformées destinées à être prolongées par les abeilles dans les conditions indiquées précédemment. Il apparaît donc que la réalisation des alvéoles est une opération longue et délicate.

On observe également que cette solution ne permet pas d'optimiser la production de gelée royale qui est une substance fabriquée par les ouvrières exclusivement destinées à nourrir la reine. La production de gelée royale nécessite de leurrer les abeilles, afin de les inciter à élever de nouvelles reines et de pouvoir prélever la gelée royale fabriquée. Pour cela, il est nécessaire de récupérer les larves d'abeille pondues dans les alvéoles pour les transférer dans des cupules où elles vont être nourries.

Il est donc nécessaire d'aller chercher les larves au fond des alvéoles, ce qui constitue un travail particulièrement long et délicat, qui demande de grandes précautions de manipulation en considérant l'aspect très fragile des alvéoles construites par les abeilles.

L'invention s'est fixée pour but de remédier à ces inconvénients d'une manière simple, sûre, efficace et rationnelle.

Le problème que se propose de résoudre l'invention est de s'affranchir de la réalisation des alvéoles du cadre par les abeilles, afin, notamment, d'augmenter les cadences de production et faciliter le prélèvement des larves.

Pour résoudre un tel problème, il a été conçu et mis au point un cadre de ruche pour abeilles qui comprend une plaque support pleine solidaire des côtés du cadre, ladite plaque recevant, sur chacune de ses faces, une plaque alvéolaire rapportée correspondant à la forme géométrique réalisée par la cire produite par les abeilles.

Avantageusement, la plaque support est en PVC.

Pour résoudre le problème posé de ne pas perturber le travail des abeilles, la plaque support est imprégnée, sur ses deux faces, de cire. La plaque, chauffée à une température comprise entre 40°C et 50°C environ, est trempée dans de la cire portée à une température comprise entre 50°C et 60°C environ.

Selon une autre caractéristique, chaque plaque alvéolaire est en matériau composite.

Dans une forme de réalisation, le cache est réalisé en une seule partie, les deux plaques alvéolaires étant en appui sur chacune des faces de la plaque support et solidarisées aux côtés dudit cadre.

Selon une autre forme de réalisation, le cadre est réalisé en deux parties reliées avec capacité d'articulation pour être ouvertes, l'une des parties étant équipée de la plaque support avec l'une des plaques alvéolaires, tandis que l'autre partie est équipée de l'autre plaque alvéolaire qui vient en appui avec la plaque support après fermeture desdites parties.

L'invention est exposée ci-après plus en détail à l'aide des figures des dessins annexés dans lesquels :
- la figure 1 est une vue en perspective avant assemblage des principaux éléments constitutifs du cadre selon l'invention ;
- la figure 2 est une vue en coupe transversale du cadre selon une première forme de réalisation ;
- la figure 3 est une vue en coupe transversale du cadre selon une deuxième forme de réalisation dans laquelle le cadre est réalisé en deux parties ouvrantes ;
- la figure 4 est une vue correspondant à la figure 3 en position ouverte de l'une des parties du cadre.

Le cadre en tant que tel, désigné dans son ensemble par (C) est de forme générale rectangulaire en étant réalisé en bois ou autre matériau, selon les normes dimensionnelles généralement admises dans ce domaine.

Selon l'invention, le cadre (C) est solidaire d'une plaque support pleine (1). Cette plaque support (1) est fixée à l'intérieur du cadre (C) par tout moyen connu et approprié. La plaque (1) est réalisée en PVC et est imprégnée, sur ces deux faces, de cire. Par exemple, la plaque (1) est chauffée à une température comprise entre 40°C et 50°C environ, puis trempée dans de la cire portée à une température comprise entre 50°C et 500°C environ.

La plaque support (1) reçoit en appui, sur chacune de ses faces (1a) et (1b), une plaque alvéolaire (2) et (3). Chaque plaque (2) et (3) présente une pluralité d'alvéoles (2a) et (3a), de forme géométrique hexagonale, et correspondant à celles réalisées par la cire produite par les abeilles. Avantageusement, chaque plaque alvéolaire (2) et (3) est réalisée en un matériau composite ou matériau de substitution.

A partir de cette conception de base, différentes formes de réalisation peuvent être envisagées.

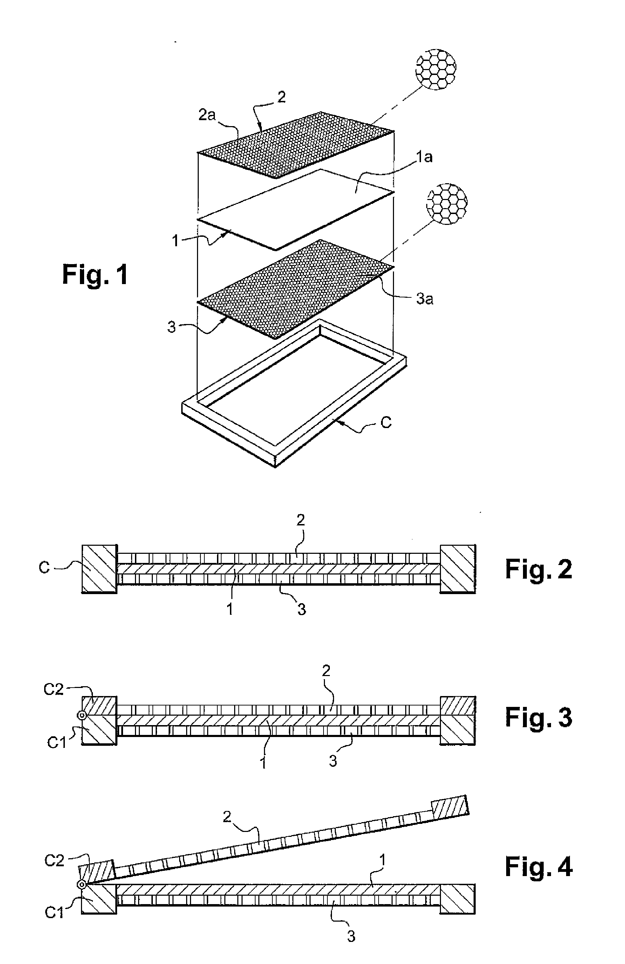

A la figure 2, le cadre (C) est réalisé en une seule partie. Les deux plaques alvéolaires (2) et (3) sont en appui sur chacune des faces (1a) et (1b) de la plaque support pleine (1) rendue solidaire de l'intérieur du cadre. Les deux plaques alvéolaires (2) et (3) sont également rendues solidaires des côtés du cadre (C).

A la figure 3, le cadre (C) est réalisé en deux parties (C1) et (C2) reliées avec capacité d'articulation en (4), pour être ouvertes (figure 4). Dans ce cas, l'une des parties (C1) du cadre est équipée de la plaque support pleine (1) et de la plaque alvéolaire (3) fixées dans ladite partie (C1) en appui sur ladite plaque support (1). L'autre plaque alvéolaire (2) est solidaire de la partie ouvrante (C2) du cadre, de manière à venir en appui avec la plaque support (1), après fermeture des deux parties (C1) et (C2).

Ainsi, après ouverture de la partie (C2) du cadre (figure 4), les larves sont directement accessibles.

Les avantages ressortent bien de la description, en particulier on souligne et on rappelle :
- la pré-réalisation des alvéoles permettant de proposer un cadre « prêt à l'emploi » ;
- la parfaite régularité et uniformité des différentes alvéoles réalisées par tout moyen mécanique approprié permettant, par exemple, de robotiser le prélèvement des larves ;
- l'utilisation en apiculture standard, notamment dans le cas d'un cadre fixe ;
- l'utilisation pour la production de gelée royale notamment dans le cas d'un cadre ouvrant.

## Revendications

1. Cadre de ruche pour abeilles, **caractérisé en ce qu'**il comprend une plaque support pleine (1) solidaire des côtés du cadre, ladite plaque (1) recevant, sur chacune de ses faces, une plaque alvéolaire rapportée (2) et (3) correspondant à la forme géométrique réalisée par la cire produite par les abeilles.

2. Cadre selon la revendication 1, **caractérisé en ce que** la plaque support (1) est en PVC.

3. Cadre selon l'une des revendications 1 et 2, **caractérisé en ce que** la plaque support (1) est imprégnée, sur ses deux faces, de cire.

4. Cadre selon l'une des revendications 1 à 3, **caractérisé en ce que** la plaque (1) est chauffée à une température comprise entre 40°C et 50°C environ, puis trempée dans de la cire portée à une température comprisse entre 50°C et 60°C environ.

5. Cadre selon la revendication 1, **caractérisé en ce que** chaque plaque alvéolaire (2) et (3) est en matériau composite.

6. Cadre selon l'une quelconque des revendications 1 à 5, **caractérisé en ce qu'**il est réalisé en une seule partie, les deux plaques alvéolaires (2) et (3) étant en appui sur chacune des faces (1a) et (1b) de la plaque support (1) et solidarisées aux côtés dudit cadre.

7. Cadre selon l'une des revendications 1 à 5, **caractérisé en ce qu'**il est réalisé en deux parties (C1) et (C2) reliées avec capacité d'articulation pour être ouvertes, l'une des parties (C1) étant équipée de la plaque support (1) avec l'une des plaques alvéolaires (3), tandis que l'autre partie (C2) est équipée de l'autre plaque alvéolaire (2) qui vient en appui avec la plaque support (1) après fermeture desdites parties (C1) et (C2).
